# EUROPÄISCHE PATENTSCHRIFT

(11) **EP 3 760 903 B1**
(45) Veröffentlichungstag und Bekanntmachung des Hinweises auf die Patenterteilung: **13.04.2022**
(21) Anmeldenummer: 19184335.8
(22) Anmeldetag: 04.07.2019
(51) Int. Cl.: F16L 9/12, F16L 13/02, F16L 47/02, F16L 57/00

(54) **MEHRSCHICHTIGES ROHR SOWIE VERFAHREN ZUR VERWENDUNG UND HERSTELLUNG**
MULTILAYERED TUBE AND METHODS OF USE AND MANUFACTURE
TUYAU MULTICOUCHE ET PROCEDES D'UTILISATION ET DE FABRICATION

(43) Veröffentlichungstag der Anmeldung: 06.01.2021
(73) Patentinhaber: HakaGerodur AG, 9200 Gossau (CH)
(72) Erfinder: VOLLENWEIDER, Bruno, 8864 Reichenburg (CH); ALAIMO, Hugo, 8864 Reichenburg (CH)
(74) Vertreter: Schaad, Balass, Menzl & Partner AG

(56) Entgegenhaltungen:
- EP-A1- 2 716 439
- EP-A1- 2 998 635
- DE-A1-102006 049 338
- DE-B4- 4 291 982
- DE-U1- 20 303 602

## Beschreibung

Die Erfindung betrifft ein mehrschichtiges Rohr gemäss dem Oberbegriff des Anspruchs 1, ein Verfahren zum Abschälen und ein Verfahren zur Herstellung desselben gemäss dem Oberbegriff des Anspruchs 13 bzw. 14, sowie ein Verfahren zum Verbinden gemäss dem Oberbegriff des Anspruchs 15 desselben mit einem weiteren Rohr.

DE 10 2006 049 338 A1 offenbart ein mehrschichtiges Kunststoffrohr, umfassend eine Kernschicht und eine mehrschichtige Deckschicht, deren innerste Schicht in der Art eine Zwischenschicht dazu bestimmt ist, in einem Schälvorgang die Abtrennung der Deckschicht von der Kernschicht zu vereinfachen. Die Deckschicht ist auf die Kernschicht aufextrudiert und/oder aufgeschrumpft oder aufgewickelt. Ferner weist die Deckschicht wenigstens einen achsparallel ausgerichteten oder spiralförmig zur Rohrachse Sollbruchbereich auf, der ein Abschälen der Deckschicht ermöglicht. Der Sollbruchbereich umfasst eine Lochung, d.h. eine nicht vollständige Durchtrennung, oder eine Perforation, d.h. eine Abwechslung geschwächter oder durchtrennter Bereiche mit intakten Bereichen, der Deckschicht. Optional kann ein Aufreissfaden im Inneren der Deckschicht vorhanden sein, an dem angegriffen werden kann, um die Deckschicht einzureissen. Beim Abschälen wird in einem Schritt die mehrschichtige Deckschicht von der innersten bis zu der äussersten Schicht im abzuschälenden Bereich ganz entfernt und die Kernschicht freigegeben.

DE 197 41 035 C1 offenbart ein Sanitär- oder Heizungsrohr, umfassend mindestens eine innenliegende Kunststoffschicht, eine aussenliegende Flammschutzschicht und eine die Kunststoffschicht von der Flammschutzschicht trennende Trennmittelschicht. Nach Einbringen einer Umfangsritzung in die Flammschutzschicht lässt sich diese vom Rohr abtrennen. Zur Erleichterung des örtlichen Entfernens der Flammschutzschicht ist ein axial mitlaufender Aufreissfaden zwischen der innenliegenden Kunststoffschicht und der Trennmittelschicht oder zwischen der Trennmittelschicht und der Flammschutzschicht eingebracht. Beim Ziehen am Aufreissfaden wird die Flammschutzschicht axial aufgeschlitzt.

DD 279 052 A1 offenbart ein kunststoffummanteltes Stahlrohr, welches zur Herstellung von Rohrleitungen verwendet wird, wobei die Stahlrohre miteinander durch Schweissen verbunden werden. Dazu müssen die Stahlrohrenden von der Kunststoffbeschichtung in einer umlaufenden Arbeitszone der Stahlrohrenden unter Baustellbedingungen und unter Verwendung einfacher technischer Mittel leicht befreit werden. Das kunststoffummantelte Stahlrohr umfasst eine aussenliegende Kunststoffbeschichtung und eine zwischen der Kunststoffbeschichtung und der Stahlrohroberfläche angeordnete Haftvermittlerschicht. Ausschliesslich in der Arbeitszone wird zusätzlich eine Trennschicht zwischen der Stahlrohroberfläche und der Haftvermittlerschicht angeordnet, welche die Stahlrohroberfläche von der festhaftenden Kunststoffbeschichtung freihält. Die Kunststoffbeschichtung bildet eine Korrosionsschutzschicht, welche vor dem Schweissen in der Arbeitszone abgetrennt wird. Als Trennhilfe können eine oder mehrere axialen Nuten in Längsrichtung des Stahlrohrs sowie eine umlaufende weitere Nut an der dem Ende des Stahlrohrs abgewandten Grenze der Arbeitszone eingebracht werden. Im Rahmen der Schweissvorbereitung auf der Baustelle wird die Korrosionsschutzschicht von Hand mit einem Schneidewerkzeug auf dem Grund der einen oder mehrere axialen Nuten und der umlaufenden weiteren Nut durchtrennt. Da eine Trennschicht zusätzlich zwischen der Stahlrohroberfläche und der Haftvermittlerschicht in der Arbeitszone am Rohrende angeordnet ist, weist dieses kunststoffummantelte Stahlrohr keine einheitliche Struktur über seine Gesamtlänge auf. Folglich muss ein weiterer Produktionsschritt bei der Herstellung des Rohrendes vorgenommen werden.

Bei den bekannten mehrschichtigen Rohren ist es vorgesehen, die Deckschicht in einem an das Rohrende angrenzenden, einzigen Schutzbereich abzuschälen.

Aufgabe der vorliegenden Erfindung ist es somit, ein mehrschichtiges Rohr, ein Verfahren zum Abschälen und ein Verfahren zur Herstellung desselben, sowie ein Verfahren zum Verbinden desselben mit einem weiteren mehrschichtigen Rohr zur Verfügung zu stellen, welches mehrschichtige Rohr die aufeinanderfolgende Freigabe sowohl von einer Kernschicht in einem ersten Bereich als auch einer Zwischenschicht in einem zweiten Bereich des mehrschichtigen Rohrs für eine Verbindung mit dem weiteren mehrschichtigen Rohr ermöglicht, wobei die Verbindung unter Baustellbedingungen und unter Verwendung einfacher technischer Mittel möglich sein soll.

Diese Aufgabe wird erfindungsgemäss durch ein mehrschichtiges Rohr gemäss Anspruch 1, ein Verfahren zum Abschälen gemäss Anspruch 13, ein Verfahren zur Herstellung desselben gemäss Anspruch 14 sowie ein Verfahren zum Verbinden desselben mit einem weiteren Rohr gemäss Anspruch 15 gelöst. Bevorzugte Ausführungsformen der Erfindung sind in den abhängigen Ansprüchen wiedergegeben.

Die Erfindung betrifft ein eine Axialrichtung definierendes mehrschichtiges Rohr umfassend eine Kernschicht, eine Deckschicht und eine zwischen der Kernschicht und der Deckschicht angeordneten Zwischenschicht.

Die Deckschicht bildet einen an ein Rohrende angrenzenden, umlaufenden, streifenförmigen ersten Schutzbereich, welcher sich vom Rohrende bis zu einem vom Rohrende entfernten ersten axialen Ende erstreckt.

Ferner umfasst der erste Schutzbereich ein sich vom Rohrende erstreckendes erstes Sollbruchsegment. Bevorzugt erstreckt sich das erste Sollbruchsegment vom Rohrende bis wenigstens annähernd zum ersten axialen Ende. Besonders bevorzugt erstreckt sich das erste Sollbruchsegment vom Rohrende bis zum ersten axialen Ende. Diese Ausbildung des Sollbruchsegments ermöglicht eine einfache Trennung der Deckschicht im ersten Schutzbereich.

Der erste Schutzbereich ist dazu bestimmt, die Kernschicht sowie die Zwischenschicht bis zu Verbindungsarbeiten vor Verschmutzungen, Einschnitten oder Umgebungseinflüssen beim Transport, bei der Lagerung, auf der Baustelle oder beim Absenken in einen Graben des mehrschichtigen Rohrs zu schützen. Der erste Schutzbereich ist ebenfalls dazu bestimmt, vor einer Verbindung des Rohrs mit einem weiteren Rohr, abgeschält zu werden. Somit ist sichergestellt, dass optimale Bedingungen für die Verbindung des Rohrs mit dem weiteren Rohr im ersten Schutzbereich bei den Verbindungsarbeiten gegeben sind. Der Begriff "Rohr" ist im Allgemeinen als ein langer zylindrischer, in Umfangsrichtung geschlossener Hohlkörper zu verstehen, der dazu dient ein Medium, bspw. Gase, Flüssigkeiten oder feste Körper in dem eine Rohrleitung bildenden Innere des Rohrs weiterzuleiten und dieses vom Äussere des Rohrs zu trennen.

Vorzugsweise ist das weitere Rohr ein gleichartiges weiteres Rohr. Ein gleichartiges weiteres Rohr kann identisch wie das mehrschichtige Rohr sein. Ein gleichartiges weiteres Rohr kann auch ein Verbindungsstück sein, welches eine gleiche Anschlussgeometrie, d.h. insbesondere die gleiche Reihenfolge von Schichten, an einem Ende und die gleiche oder eine andere Anschlussgeometrie am anderen Ende aufweist.

Erfindungsgemäss ist der erste Schutzbereich beim ersten axialen Ende durch eine umlaufende erste Sollbruchstelle begrenzt. Ferner bildet die Deckschicht einen an den ersten Schutzbereich angrenzenden, umlaufenden, streifenförmigen zweiten Schutzbereich, welcher sich vom ersten axialen Ende bis zu einem weiter vom Rohrende entfernten zweiten axialen Ende erstreckt und dort durch eine umlaufende zweite Sollbruchstelle begrenzt ist. Der zweite Schutzbereich ist dazu bestimmt, die Zwischenschicht vor Verschmutzungen, Einschnitte oder Umgebungseinflüssen beim Transport, bei der Lagerung, auf der Baustelle oder beim Absenken in einen Graben des mehrschichtigen Rohrs zu schützen. Somit ist sichergestellt, dass optimale Bedingungen für eine Verbindung des Rohrs mit einem weiteren Rohr im zweiten Schutzbereich bei den Verbindungsarbeiten gegeben sind. Der durch das Abschälen des ersten Schutzbereichs freigegebene Rand des zweiten Schutzbereichs bildet eine Abtrennkante für das Abschälen der Zwischenschicht.

Der durch das Abschälen des ersten Schutzbereichs freigegebene Abschnitt der Zwischenschicht wird nachstehend als abzutrennender Abschnitt der Zwischenschicht gekennzeichnet. Grundsätzlich bildet der abzutrennende Abschnitt einen in Umfangsrichtung verlaufenden, zur Umgebung freigestellten Streifen der Zwischenschicht.

Ausserdem ist der zweite Schutzbereich dazu bestimmt, für eine Verbindung des Rohrs mit dem weiteren Rohr abgeschält zu werden. Diese Anordnung ermöglicht eine umlaufende Durchtrennung der Zwischenschicht vor dem Abschälen des zweiten Schutzbereichs mit einer Schneidevorrichtung, bspw. einem Messer, deren Schneideelement entlang die Abtrennkante geführt wird. Die Abtrennkante erfüllt somit die Rolle einer Führungskante für die Durchtrennung der Zwischenschicht in Umfangsrichtung. Dies ermöglicht eine zuverlässige Vorbereitung des Rohrendes für die Verbindung mit einem weiteren Rohr, da die Durchtrennung der Deckschicht des ersten Schutzbereichs und das Abschälen der durch das Abschälen des ersten Schutzbereichs freigegebenen Zwischenschicht nach klaren Referenzmarkierungen erfolgt.

Alternativ zum oben beschriebenen Abschälen der Zwischenschicht kann die Abtrennkante eine Reisskante bilden, welche das Abschälen der durch das Abschälen des ersten Schutzbereichs freigegebenen Zwischenschicht, d.h. des abzutrennenden Abschnitts der Zwischenschicht, ohne Werkzeug ermöglicht. Diese Anordnung erlaubt eine umlaufende Durchtrennung der Zwischenschicht vor dem Abschälen des zweiten Schutzbereichs ohne Werkzeug, weil die Reisskante diese Funktion erfüllt. Diese Alternative weist den weiteren Vorteil auf, dass die durch das Abschälen des ersten Schutzbereichs freigegebene Zwischenschicht abgeschält werden kann, ohne Risiko die Kernschicht zu verletzen.

Der zweite Schutzbereich ermöglicht die Vorbestimmung des freizugebenden Abschnitts der Zwischenschicht, welcher beim Abschälen des zweiten Schutzbereichs bleibt und nachstehend als verbleibender Abschnitt der Zwischenschicht gekennzeichnet wird. Grundsätzlich bildet der verbleibende Abschnitt also einen in Umfangsrichtung verlaufenden, zur Umgebung freigestellten Streifen der Zwischenschicht. Dadurch, dass der verbleibende Abschnitt der Zwischenschicht jeweils, wie vorstehend erklärt, auf die gleiche Weise und im gleichen Ausmass freigegeben wird, kann die Zuverlässigkeit der Vorbereitung der Verbindungsarbeiten verbessert werden.

In einer bevorzugten Ausführungsform ist die Haftkraft zwischen der Deckschicht und der Zwischenschicht kleiner als die Haftkraft zwischen der Zwischenschicht und der Kernschicht. Somit kann die Deckschicht abgeschält werden, ohne die Zwischenschicht, insbesondere den verbleibenden Abschnitt, zu beschädigen. Diese Eigenschaft ist von Vorteil, um eine zuverlässige Verbindung des verbleibenden Abschnitts mit der Zwischenschicht des weiteren Rohrs sicherzustellen. Die Zwischenschicht kann bspw. visuell auf Beschädigungen geprüft werden, dadurch dass, nach dem Abschälen des ersten bzw. des zweiten Schutzbereichs, die Kernschicht durch die Zwischenschicht bereichsweise nicht sichtbar ist oder die Zwischenschicht eine durchgehende, homogene Oberfläche aufweist.

In einer bevorzugten Ausführungsform ist die Haftkraft zwischen der Zwischenschicht und der Kernschicht derart bemessen, dass die Zwischenschicht abgeschält werden kann, ohne die Kernschicht zu beschädigen. Dies kann visuell geprüft werden, dadurch dass die Kernschicht eine homogene Oberfläche nach dem Abschälen der Zwischenschicht aufweist. Vorzugsweise kann zumindest der abzutrennende Abschnitt der Zwischenschicht mit der Klinge eines Messers oder mit einem Fingernagel von der Kernschicht getrennt werden.

In einer bevorzugten Ausführungsform umfasst der zweite Schutzbereich ein sich vom ersten axialen Ende bis zum zweiten axialen Ende erstreckendes, zweites Sollbruchsegment.

Das erste und das zweite Sollbruchsegment bilden eine Schwachstelle in der Deckschicht und erlauben die Entfernung der Deckschicht von der Zwischenschicht durch Abschälen beidseitig des ersten bzw. des zweiten Sollbruchsegments. Die in der Decksschicht eingebaute Schwachstelle ermöglicht einen einfachen Beginn des Abschälens des ersten bzw. des zweiten Schutzbereichs. Dadurch wird vermieden, dass eine übermässige Kraft beim axialen Durchtrennen des ersten bzw. des zweiten Schutzbereichs, insbesondere mit einem Abschälwerkzeug ausgeübt werden muss. Durch das erste bzw. das zweite Sollbruchsegment ist das Abschälwerkzeug geführt, sodass das Risiko eines Rutschen des Abschälwerkzeugs und eine darauf zurückzuführende Verletzung der Deckschicht minimiert werden kann.

Abschälwerkzeuge sind dem Fachmann bekannt, bspw. in der Form eines Abmantelungswerkzeugs.

In einer bevorzugten Ausführungsform verläuft das erste und/oder das zweite Sollbruchsegment axial. Somit kann das Abschälwerkzeug in axialer Richtung eingesetzt werden, um einen optimalen Anstellwinkel zum Durchtrennen der Decksicht aufzuweisen. Es ist jedoch auch möglich, eine Ausrichtung des ersten und/oder des zweiten Sollbruchsegments schräg zur axialer Richtung vorzusehen.

In einer bevorzugten Ausführungsform sind das erste und das zweite Sollbruchsegment, in Umfangsrichtung gesehen, um 10 Grad bis 60 Grad zueinander versetzt ausgebildet. Die versetzte Anordnung des ersten bezüglich des zweiten Sollbruchsegments dient dazu, das Durchtrennen des ersten Schutzbereichs vom Durchtrennen des zweiten Schutzbereichs zu unterscheiden. Insbesondere kann ein unabsichtliches Durchtrennen des zweiten Schutzbereichs minimiert werden, wenn am Ende des ersten Sollbruchsegments das Abschälwerkzeug weiter axial geschoben werden möchte. In einem solchen Fall trifft das Abschälwerkzeug auf die ihre nominale Dicke aufweisende Deckschicht, sodass das Abschälwerkzeug wegen des Widerstands in einem ersten Schritt gebremst wird. Die Versetzung um 10 Grad bis 60 Grad erleichtert das Auffinden des zweiten Sollbruchsegments in Umfangsrichtung, wenn das erste Sollbruchsegment bereits geortet wurde.

Vorzugsweise beträgt die Versetzung 10 Grad bis 30 Grad, um eine Drehung des mehrschichtigen Rohrs zu vermeiden, wenn das zweite Sollbruchsegment durchgetrennt werden muss. Eine Versetzung von 15 Grad hat sich experimentell als besonders gut geeignet erwiesen.

In einer bevorzugten Ausführungsform sind weitere Sollbruchsegmente im ersten bzw. im zweiten Schutzbereich vorgesehen. Dies kann bei Rohren mit einem Durchmesser grösser als ca. 500 mm das Abschälen erleichtern, da dies in mehreren Abschnitten erfolgen kann.

In einer bevorzugten Ausführungsform ist bzw. sind die erste und/oder die zweite Sollbruchstelle und/oder das erste und/oder das zweite Sollbruchsegment durch eine ununterbrochene und sich in radialer Richtung nur durch einen Teil der Dicke der Deckschicht erstreckende, nutenartige Vertiefung gebildet.

Der Begriff "ununterbrochen" bedeutet, dass die Vertiefung in Umfangsrichtung für die erste und/oder die zweite Sollbruchstelle bzw. in Axialrichtung für das erste und/oder das zweite Sollbruchsegment durchgehend ausgebildet ist. In anderen Worten weisen die erste und/oder die zweite Sollbruchstelle und/oder das erste und/oder das zweite Sollbruchsegment keinen intakten Bereich der Deckschicht auf.

Da die Vertiefung sich in radialer Richtung nur durch einen Teil der Dicke der Deckschicht erstreckt, ist sichergestellt, dass der erste und der zweite Schutzbereich in Position bleiben, bis ein absichtliches Abschälen stattfindet. Ferner wird dadurch sichergestellt, dass, beim Herstellen der ersten und/oder der zweiten Sollbruchstelle und/oder des ersten und/oder des zweiten Sollbruchsegments, sich unter der Deckschicht befindende Schichten wie die Zwischenschicht und die Kernschicht nicht beschädigt werden.

In einer bevorzugten Ausführungsform beträgt die Vertiefung zwischen 40% bis 95% der Dicke der Deckschicht, gemessen von der Oberfläche der Deckschicht bis zum Boden der Sollbruchstelle bzw. des Sollbruchsegments. In diesem Zahlenbereich erlaubt die Vertiefung eine einfache Durchtrennung des ersten und zweiten Schutzbereichs der Deckschicht. Allerdings wird eine unabsichtliche Durchtrennung bspw. durch Reibung oder einen Schlag vermieden. Bevorzugt beträgt die Vertiefung zwischen 50% bis 90% der Dicke der Deckschicht. Dabei ist ausserdem das Herstellen der ersten und/oder der zweiten Sollbruchstelle und/oder des ersten und/oder des zweiten Sollbruchsegments vereinfacht, weil die verbleibende Dicke der Wandstärke grössere Toleranzen betreffend das Herstellen der Vertiefung erlaubt.

Bevorzugt ist die Vertiefung bei der ersten und zweiten Sollbruchstelle sowie bei dem ersten und zweiten Sollbruchsegment wenigstens annähernd gleich ausgebildet. Dies ermöglicht ein kostengünstige und einfache Herstellung der Vertiefung, weil nur eine einzige Einstellung eines entsprechenden Werkzeuges zur Herstellung der Vertiefung nötig ist.

Es ist jedoch auch möglich, einerseits die erste und die zweite Sollbruchstelle und anderseits das erste und das zweite Sollbruchsegment mit unterschiedlichen Vertiefungen herzustellen.

In einer bevorzugten Ausführungsform weist die nutenförmige Vertiefung, in einer axial verlaufenden Ebene betrachtet, einen V-förmigen oder U-förmigen Querschnitt auf. Die Schneidekante eines marktüblichen Abschälwerkzeugs oder Messers kann problemlos in eine solche Vertiefung zur Durchtrennung der Deckschicht eingesetzt werden.

Insbesondere für die durch den freigegebenen Rand des zweiten Schutzbereichs gebildete Reisskante ist der V-förmige oder U-förmige Querschnitt von Vorteil. Der freigegebene Rand ist nämlich, in Längsschnitt betrachtet, radial innen wenigstens annähernd rechtwinklig und anschliessend radial aussen zumindest teilweise schräg zur Axialrichtung ausgebildet ist. Diese Ausbildung optimiert die Form der Reisskante, sodass der abzutrennende Abschnitt der Zwischenschicht durch einfaches Ziehen präzis abgerissen werden kann.

In einer bevorzugten Ausführungsform liegt die axiale Länge des ersten Schutzbereichs zwischen 1 cm und 15 cm. Diese Länge ist derart bemessen, dass Werkzeuge und Verbindungselemente zur Verbindung des mehrschichtigen Rohrs mit dem weiteren mehrschichtigen Rohr am Rohrende problemlos eingesetzt werden können. Ausserdem bleibt die weiter als die axiale Länge des ersten Schutzbereichs vom Rohrende entfernte Zwischenschicht und Deckschicht vor einem unzulässigen Erwärmen geschützt. Ferner ist im Fall einer Verbindung durch Schweissen der Kernschicht sichergestellt, dass ein beim Schweissen gegebenenfalls entstehender Schweisswulst die Zwischenschicht und die Deckschicht nicht berührt. Bevorzugt liegt die axiale Länge des ersten Schutzbereichs zwischen 2 cm und 10 cm. In diesem Zahlenbereich kann die Länge des Verbindungsbereichs optimiert werden, um gleichzeitig Platz für den Einsatz der Werkzeuge und, je nach Verbindungsart, für Verbindungselemente oder den Schweisswulst zu haben.

In einer bevorzugten Ausführungsform liegt die axiale Länge des zweiten Schutzbereichs zwischen 2 cm und 5 cm. Diese Länge ist derart bemessen, dass Werkzeuge sowie Verbindungsmaterial zur Verbindung des mehrschichtigen Rohrs mit dem weiteren mehrschichtigen Rohr am Rohrende problemlos eingesetzt werden können. Bevorzugt liegt die axiale Länge des zweiten Schutzbereichs zwischen 2 cm und 3 cm. In diesem Fall kann die Länge des Verbindungsbereichs optimiert werden, wie vorstehend erklärt.

Bevorzugt verlaufen die erste und zweite Sollbruchstelle parallel zueinander. Besonders bevorzugt bleibt die axiale Länge des ersten und des zweiten Schutzbereichs konstant über den gesamten Umfang des mehrschichtigen Rohrs. Diese Anordnung ermöglicht eine einfache Herstellung der ersten und zweiten Sollbruchstelle. Somit bilden der abgeschälte erste und zweite Schutzbereich streifenförmige, d.h. lange und schmale Abschnitte der Deckschicht.

In einer bevorzugten Ausführungsform weist der erste und/ oder der zweite Schutzbereich eine Markierung auf, um den ersten Schutzbereich vom zweiten Schutzbereich zu unterscheiden. Bevorzugt ist eine Rändelung des zweiten Schutzbereichs als Markierung vorgesehen, sodass dieser nach dem Abschälen des ersten Schutzbereichs klar erkennbar ist und abgeschält wird. Folglich kann sichergestellt werden, dass die Vorbereitung des Rohrendes richtig verläuft, d.h. insbesondere, dass nicht nur der erste, sondern auch der zweite Schutzbereich abgeschält werden.

In einer bevorzugten Ausführungsform weist der erste Schutzbereich ein erstes Merkzeichen und der zweite Schutzbereich ein zweites Merkzeichen auf. Das erste und das zweite Merkzeichen definieren eine entlang des ersten bzw. des zweiten Sollbruchsegments angeordnete, bevorzugte Einsatzstelle eines Hebelarmmittels, welches zwischen der Deckschicht im ersten bzw. im zweiten Schutzbereich und der Zwischenschicht eingeführt werden kann, wenn das erste bzw. das zweite Sollbruchsegment durchtrennt ist. Das Hebelarmmittel dient dazu, die Einleitung des Abtrennens der Deckschicht im ersten bzw. im zweiten Schutzbereich von der Zwischenschicht in unmittelbaren Nähe des ersten bzw. des zweiten Sollbruchsegments zu erleichtern. Somit verläuft das Abschälen des ersten bzw. des zweiten Schutzbereichs in Umfangsrichtung effizienter und mit einem geringen Risiko, die Zwischenschicht zu verletzen. Es ist jedoch auch möglich, das mehrschichtige Rohr nur mit dem ersten Merkzeichen oder nur mit dem zweiten Merkzeichen auszubilden. Das Hebelarmmittel kann vorteilhafterweise an dem Abschälwerkzeug ausgebildet sein, sodass ein einziges Werkzeug zum Abschälen des mehrschichtigen Rohrs benötigt wird.

Bevorzugt ist das erste und das zweite Merkzeichen mittig des ersten bzw. des zweiten Sollbruchsegments angeordnet. Diese Anordnung erlaubt ein schnelles Erkennen des Einsatzpunkts des Hebelarmmittels beim Abschälen der Deckschicht und einen optimalen Einsatz des Hebelarmmittels, um das Risiko einer Verletzung der Zwischenschicht weiter zu reduzieren.

In einer bevorzugten Ausführungsform ist die Zwischenschicht eine Mehrschichtverbundfolie mit mehreren einzelnen Schichten, wobei wenigstens eine Schicht der Mehrschichtverbundfolie eine Sperrschicht sein kann. Die Sperrschicht kann als Metallfolienlage und/oder als Kunststoffschicht mit sperrenden Eigenschaften ausgebildet sein. Die Zwischenschicht ist dazu bestimmt, mit der Zwischenschicht des weiteren Rohrs wenigstens annähernd dichtend verbunden zu werden.

Konkret ist der verbleibende Abschnitt der Zwischenschicht dazu bestimmt über eine Verbindungsschicht mit dem verbleibenden Abschnitt der Zwischenschicht des weiteren Rohrs verbunden zu werden, wobei die Verbindung durch bspw. Kleben oder Schweissen erfolgen kann.

Der Begriff "dichtend verbunden" ist so zu verstehen, dass die sperrenden Eigenschaften der Zwischenschicht im Verbindungsbereich wenigstens annähernd vollständig beibehalten sind.

Die Zwischenschicht kann mit der Zwischenschicht des gleichartigen weiteren Rohrs über die Verbindungsschicht verbunden werden. Zur Beibehaltung der Eigenschaften der Zwischenschicht, d.h. der sperrenden Eigenschaften, bis zur Zwischenschicht des gleichartigen weiteren Rohrs weist die Verbindungsschicht wenigstens annähernd die gleichen sperrenden Eigenschaften wie die Zwischenschicht auf.

Die Sperrschicht kann bspw. diffusionshemmende Eigenschaften aufweisen, d.h. das Durchdringen von Substanzen oder Molekülen durch die Sperrschicht in Richtung vom Äussere zum Innere und/oder in Richtung vom Innere zum Äussere des mehrschichtigen Rohrs wenigstens annähernd vollständig verhindern. Somit kann eine Kontamination des im mehrschichtigen Rohr geführten Mediums durch die Umgebung des mehrschichtigen Rohrs und/oder eine Kontamination der Umgebung des mehrschichtigen Rohrs durch das im mehrschichtigen Rohr geführte Medium verhindert werden.

Gegebenenfalls kann die Sperrschicht eine Korrosion der weiteren Schichten vermeiden.

Eine Metallfolienlage kann dabei beispielsweise eine Aluminiumfolienlage, eine Kupferfolienlage oder eine Stahlfolienlage sein.

Die Metallfolienlage kann beispielsweise eine unbeschichtete Metallfolie oder eine einseitig selbstklebende Metallfolie sein, vorzugsweise handelt es sich dabei um eine Aluminiumfolie. Die Metallfolie kann zusätzlich ein- oder beidseitig mit einem Kunststoff beschichtet sein, um die Haftungseigenschaften zu verbessern. Mögliche Kunststoffe sind Polyethylen (PE), Polypropylen (PP), Polyamid (PA), Polyethylenterephthalat (PET), Polyurethan (PUR) oder andere thermoplastische Kunststoffe.

Eine Kunststoffschicht mit sperrenden, insbesondere diffusionshemmenden Eigenschaften kann beispielsweise ein PVDF (Polyvinylidenfluorid), EVOH (Ethylen-Vinylalkohol-Copolymer), ein Polyamid oder ein LCP-Polymer (liquid crystal polymer) enthalten.

Die Mehrschichtverbundfolie kann eine, vorzugsweise mehrere Kunststoffschichten aufweisen, welche die Reissfestigkeit und Langzeitstabilität der Mehrschichtverbundfolie positiv beeinflussen. Besonders bevorzugt sind dabei die Kunststoffschichten aus Polyethylen, Polypropylen, Polyethylenterephthalat, Polypropylen-Copolymer, Polyamid oder andere geeignete thermoplastische Kunststoffe.

Die Zwischenschicht hat vorzugsweise eine Dicke von 10 µm bis 500 µm. Diese Dicke hat den Vorteil, dass sie einfach über die durch den Rand des zweiten Schutzbereichs gebildete Reisskante abgeschält werden kann.

In einer bevorzugten Ausführungsform kann die Zwischenschicht eine Metallfolienlage der vorstehend beschriebenen Art sein.

In einer bevorzugten Ausführungsform kann die Zwischenschicht eine Kunststoffschicht aus einem Kunststoff ausgewählt aus der Gruppe bestehend aus Polyethylen, Polypropylen, Polyethylenterephthalat, Polyamid, Polyvinylidenfluorid oder Mischungen davon ausgebildet sein.

Es ist jedoch auch möglich, die Kernschicht aus Metall auszubilden, insbesondere aus Kupfer oder aus Aluminium.

In einer bevorzugten Ausführungsform kann die Deckschicht aus einem Kunststoff ausgewählt aus der Gruppe bestehend aus Polyethylen, Polypropylen (PP) und Polyethylenterephthalat oder Mischungen davon ausgebildet sein.

In einer besonders bevorzugten Ausführungsform ist die Kernschicht aus Kunststoff, insbesondere HDPE, und die Deckschicht aus Kunststoff, insbesondere Polypropylen (PP), ausgebildet.

Die Kernschicht, die Zwischenschicht und die Deckschicht können in bekannter Weise mittels Extrusion hergestellt werden. Es ist jedoch auch möglich, die als Mehrschichtverbundfolie oder Metallfolienlage ausgebildete Zwischenschicht auf die Kernschicht in bekannter Weise zu wickeln.

In einem weiteren Aspekt betrifft die Erfindung ein Verfahren zum Abschälen eines mehrschichtigen Rohrs nach einem der vorgehenden Ausführungsformen zur Herstellung einer Verbindung mit einem weiteren Rohr, vorzugsweise mit einem gleichartigen weiteren Rohr. Das Verfahren ist durch die folgenden aufeinanderfolgenden Schritte gekennzeichnet:
- Durchtrennen der Deckschicht im ersten Schutzbereich entlang des ersten Sollbruchsegments;
- Abschälen der Deckschicht im ersten Schutzbereich unter Bildung der Abtrennkante durch den freigegebenen Rand des zweiten Schutzbereichs;
- Abschälen der durch das Abschälen des ersten Schutzbereichs freigegebenen Zwischenschicht, d.h. des abzutrennenden Abschnitts der Zwischenschicht, bis zur Abtrennkante;
- Durchtrennen der Deckschicht im zweiten Schutzbereich entlang des zweiten Sollbruchsegments, und
- Abschälen der Deckschicht im zweiten Schutzbereich.

In einer bevorzugten Ausführungsform bildet die Abtrennkante eine Reisskante, welche das Abschälen des abzutrennenden Abschnitts ohne Werkzeug ermöglicht.

Zum Abschälen des abzutrennenden Abschnitts der Zwischenschicht kann zuerst ein sich auf einer Stirnseite des Rohrendes befindender Randbereich des abzutrennenden Abschnitts von der Kernschicht getrennt werden, bspw. mit dem Fingernagel oder mit einem Messer. Die Zwischenschicht kann dann weiter vom Randbereich schräg zur Axialrichtung des Rohrs in Richtung zur Reisskante gezogen werden. Dies hat zur Folge, dass die Zwischenschicht reisst und von der Kernschicht getrennt wird. Der bereits abgelöste Teil der Zwischenschicht wird weiter gezogen bis der abzutrennende Abschnitt über seine gesamte axiale Länge, d.h. bis zur Reisskante gerissen ist. Danach kann der bereits abgelöste Teil des abzutrennenden Abschnitts weiter schräg zur Axialrichtung entlang der Reisskante über den gesamten Umfang des Rohrs gezogen und gerissen werden. Dies hat zur Folge, dass der abzutrennende Abschnitt der Zwischenschicht von der unter der Deckschicht bleibenden Zwischenschicht entlang der Reisskante einfach und zuverlässig abgetrennt wird. Ferner erfolgt das Abschälen ohne Risiko die Kernschicht zu verletzten.

Alternativ kann die umlaufende Durchtrennung der Zwischenschicht von dem abzutrennenden Abschnitt der Zwischenschicht mit einer Schneidevorrichtung, bspw. einem Messer, deren Schneideelement entlang die Abtrennkante geführt wird, durchgeführt werden.

In einem weiteren Aspekt betrifft die Erfindung ein Verfahren zur Herstellung eines mehrschichtigen Rohrs nach einem der vorgehenden Ausführungsformen, wobei die erste und die zweite Sollbruchstelle, sowie das erste und das zweite Sollbruchsegment durch Verformung der Deckschicht beim Abkühlen nach deren Extrusion erfolgt. Dieses Verfahren erlaubt eine effiziente Herstellung, da das Rohr direkt auf der Produktionslinie bearbeitet werden kann. Vorzugsweise erfolgt diese Verformung bei einer Temperatur zwischen 30°C und 50°C. In diesem Temperaturbereich ist es möglich die Deckschicht zu verformen, ohne einen Druck auszuüben, die zu einer Durchtrennung der Decksicht führen könnte.

Es ist jedoch auch möglich die erste und die zweite Sollbruchstelle, sowie das erste und das zweite Sollbruchsegment durch Verformung der Deckschicht bei Raumtemperatur bspw. ausserhalb der Produktionslinie durchzuführen.

In einem weiteren Aspekt betrifft die Erfindung ein Verfahren zum Verbinden eines mehrschichtigen Rohrs nach einem der vorgehenden Ausführungsformen mit einem gleichartigen weiteren Rohr, wobei das mehrschichtige Rohr und das gleichartige weitere Rohr durch das Verfahren zum Abschälen eines mehrschichtigen Rohrs nach einem der vorgehenden Ausführungsformen abgeschält werden.

Die Verbindungsarbeiten, d.h. insbesondere die Verbindung des Rohrendes mit einem Rohrende des gleichartigen weiteren Rohrs, erfolgen dadurch, dass Schichten des Rohrs und des weiteren Rohrs verbunden werden. In bekannter Weise kann die Verbindung, insbesondere der Kernschicht, über Schweissen erfolgen.

Bevorzugt werden Schichten des Rohrs mit den entsprechenden Schichten des weiteren Rohrs miteinander verbunden. Die entsprechenden Schichten des weiteren Rohrs können gleich sein oder im Wesentlichen die gleiche Funktion und/oder die gleiche Position in der Anordnung der Schichten und/oder die gleiche Eigenschaften wie die entsprechenden Schichten des Rohrs aufweisen.

Im vorliegenden Fall bedeutet dies, dass die Kernschicht mit der entsprechenden Kernschicht, die Zwischenschicht mit der entsprechenden Zwischenschicht und die Deckschicht mit der entsprechenden Deckschicht des gleichartigen weiteren Rohrs in einem umlaufenden Verbindungsbereich des Rohrs verbunden werden.

Der Verbindungsbereich umfasst im Wesentlichen den Bereich des Rohrs, welcher durch den ersten und den zweiten Schutzbereich umschlossen ist.

Für die Verbindung der Zwischenschicht mit der entsprechenden Zwischenschicht des weiteren Rohrs kann eine Verbindungsschicht eingesetzt werden. Eine weitere Verbindungsschicht kann auch für die Verbindung der Deckschicht mit der entsprechenden Deckschicht des weiteren Rohrs eingesetzt werden. Vorzugsweise stellt die Verbindungsschicht sicher, dass die Eigenschaften der Schicht bis zu der zu verbindenden Schicht des gleichartigen weiteren Rohrs wenigstens annähernd beibehalten werden. Diese Verbindung kann bspw. über Schweissen oder Kleben erfolgen. Es ist jedoch auch möglich, ein Kupplungsstück für die Verbindung des Rohrs mit dem weiteren Rohr einzusetzen.

Bevorzugt wird die Kernschicht direkt mit der Kernschicht des gleichartigen weiteren Rohrs verbunden, wobei die Zwischenschicht und die Deckschicht jeweils über eine Verbindungsschicht mit der Zwischenschicht und der Deckschicht des gleichartigen weiteren Rohrs verbunden werden.

Weitere Vorteile und Eigenschaften der Erfindung gehen aus der nachstehenden Beschreibung eines Ausführungsbeispiels hervor, welches anhand der beiliegenden Figuren erläutert wird.

Diese zeigen rein schematisch:
- Fig. 1: eine perspektivische Ansicht eines erfindungsgemässen mehrschichtigen Rohrs;
- Fig. 2: eine Seitenansicht und einen Längsschnitt des mehrschichtigen Rohrs gemäss Fig.1;
- Fig. 3: eine perspektivische Ansicht des mehrschichtigen Rohrs gemäss Fig.1, dessen erster Schutzbereich abgeschält wurde;
- Fig. 4: eine Seitenansicht und einen Längsschnitt des mehrschichtigen Rohrs gemäss Fig.3;
- Fig. 5: eine perspektivische Ansicht des mehrschichtigen Rohrs gemäss Fig.3, dessen Zwischenschicht abgeschält wurde;
- Fig. 6: eine Seitenansicht und einen Längsschnitt des mehrschichtigen Rohrs gemäss Fig.5;
- Fig. 7: eine perspektivische Ansicht des mehrschichtigen Rohrs gemäss Fig.5, dessen zweiter Schutzbereich abgeschält wurde; und
- Fig. 8: eine Seitenansicht und einen Längsschnitt des mehrschichtigen Rohrs gemäss Fig.7.

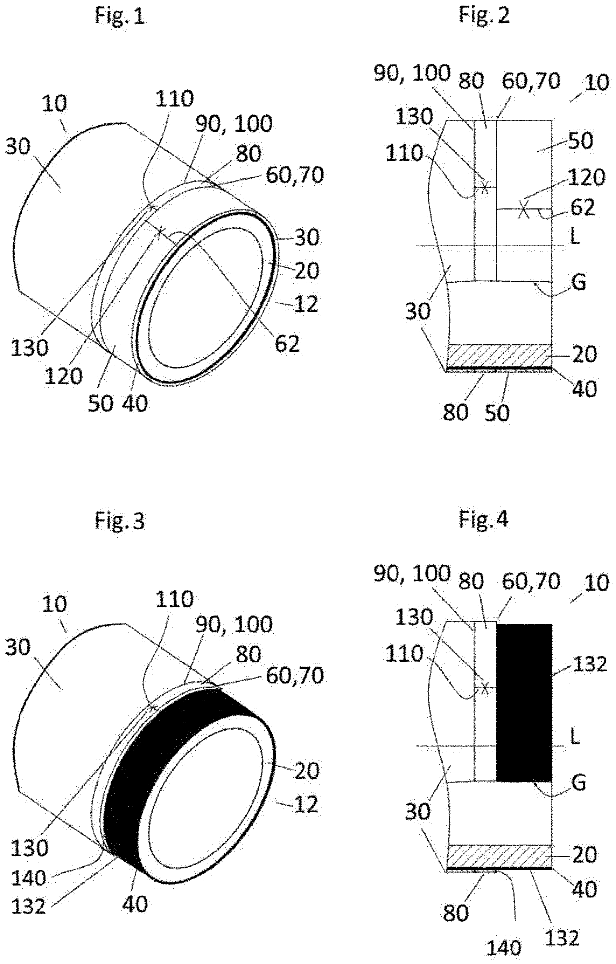

In Fig. 1 ist ein eine Axialrichtung L definierendes, erfindungsgemässes mehrschichtiges Rohr 10 abgebildet, welches eine Kernschicht 20, eine Deckschicht 30 und eine zwischen der Kernschicht 20 und der Deckschicht 30 angeordneten Zwischenschicht 40 umfasst.

Die Fig. 1 und 2 zeigen das mehrschichtige Rohr 10 in seinem Zustand vor dem Beginn der Vorbereitung eines Rohrendes 12 für die Verbindung mit einem nicht dargestellten weiteren Rohr.

Auf den Fig. 1, 3, 5 und 7 ist das mehrschichtige Rohr 10 nach aufeinanderfolgenden Schritten der Vorbereitung des Rohrendes 12 dargestellt. Diesen Figuren sind die Fig. 2, 4, 6 bzw. 8 zuzuordnen, welche jeweils in dem sich oberhalb der Linie G befindenden Bereich der Zeichnung die entsprechende Seitenansicht des mehrschichtigen Rohrs 10 und in dem sich unterhalb der Linie G befindenden Bereich der Zeichnung den entsprechenden Längsschnitt des mehrschichtigen Rohrs 10 zeigen.

Die Deckschicht 30 bildet einen an das Rohrende 12 angrenzenden, umlaufenden, streifenförmigen ersten Schutzbereich 50, welcher sich vom Rohrende 12 bis zu einem vom Rohrende entfernten ersten axialen Ende 60 erstreckt und ein axial verlaufendes, sich vom Rohrende 12 bis zum ersten axialen Ende 60 erstreckendes erstes Sollbruchsegment 62 umfasst. Der erste Schutzbereich 50 ist beim ersten axialen Ende 60 durch eine umlaufende erste Sollbruchstelle 70 begrenzt.

Ferner bildet die Deckschicht 30 einen an den ersten Schutzbereich 30 angrenzenden, umlaufenden, streifenförmigen zweiten Schutzbereich 80, welcher sich vom ersten axialen Ende 60 bis zu einem zweiten axialen Ende 90 erstreckt und durch eine umlaufende zweite Sollbruchstelle 100 begrenzt ist. Der zweite Schutzbereich 80 umfasst ein sich vom ersten axialen Ende 60 bis zum zweiten axialen Ende 90 erstreckendes, axial verlaufendes zweites Sollbruchsegment 110. Die erste und zweite Sollbruchstelle 70 bzw. 100 verlaufen parallel zueinander.

In der abgebildeten Ausführungsform sind das erste und das zweite Sollbruchsegment, in Umfangsrichtung gesehen, um ca. 20 Grad zueinander versetzt ausgebildet.

Die erste und die zweite Sollbruchstelle 70 bzw. 100 sowie das erste und das zweite Sollbruchsegment 62 bzw. 110 sind durch eine ununterbrochene und sich in radialer Richtung nur durch einen Teil der Dicke der Deckschicht 30 erstreckende, gleich ausgebildete Vertiefung gebildet. In der abgebildeten Ausführungsform beträgt die Vertiefung 70% der Dicke der Deckschicht 30, gemessen von der Oberfläche der Deckschicht 30 bis zum Boden der ersten bzw. der zweiten Sollbruchstelle 70 bzw. 100 und des ersten bzw. des zweiten Sollbruchsegments 62 bzw. 110.

Der erste Schutzbereich 50 umfasst ein erstes Merkzeichen 120 und der zweite Schutzbereich 80 umfasst ein zweites Merkzeichen 130, wobei das erste und das zweite Merkzeichen 120 bzw. 130 mittig des ersten bzw. des zweiten Sollbruchsegments 70 bzw. 100 ausgebildet sind. Das erste und das zweite Merkzeichen 120 bzw. 130 definieren eine entlang des ersten bzw. des zweiten Sollbruchsegments 70 bzw. 100 angeordnete, bevorzugte Einsatzstelle eines Hebelarmmittels eines Abschälwerkzeugs zum Abtrennen des ersten bzw. des zweiten Schutzbereichs 50 bzw. 80 in Umfangsrichtung.

Vorliegend ist die Deckschicht 30 aus Polypropylen (PP), die Kernschicht 20 aus HDPE und die Zwischenschicht 40 als eine Mehrschichtverbundfolie ausgebildet, wobei die Mehrschichtverbundfolie eine als Aluminiumfolienlage ausgebildete Sperrschicht umfasst. Ferner weist die Deckschicht 30 eine Dicke von 3 mm, die Kernschicht 20 eine Dicke von 20 mm und die Zwischenschicht eine Dicke von etwa 100 µm auf.

In Fig. 3 und 4 ist das mehrschichtige Rohr 10 nach dem Abschälen des ersten Schutzbereichs 50 abgebildet. Ein durch das Abschälen des ersten Schutzbereichs 50 freigegebene Abschnitt 132 der Zwischenschicht 40 wird nachstehend als abzutrennender Abschnitt 132 der Zwischenschicht gekennzeichnet. Grundsätzlich bildet der abzutrennende Abschnitt 132 einen in Umfangsrichtung verlaufenden, zur Umgebung freigestellten Streifen der Zwischenschicht 40.

Durch das Abschälen des ersten Schutzbereichs 50 wurde ein Rand 140 des zweiten Schutzbereichs 80 freigegeben, welcher eine Abtrennkante 140 für das Abschälen der Zwischenschicht 40 bildet. Im vorliegenden Fall bildet die Abtrennkante eine Reisskante 140, welche das Abschälen der durch das Abschälen des ersten Schutzbereichs 50 freigegebenen Zwischenschicht 40, d.h. des abzutrennenden Abschnitts 132, ohne Werkzeug ermöglicht.

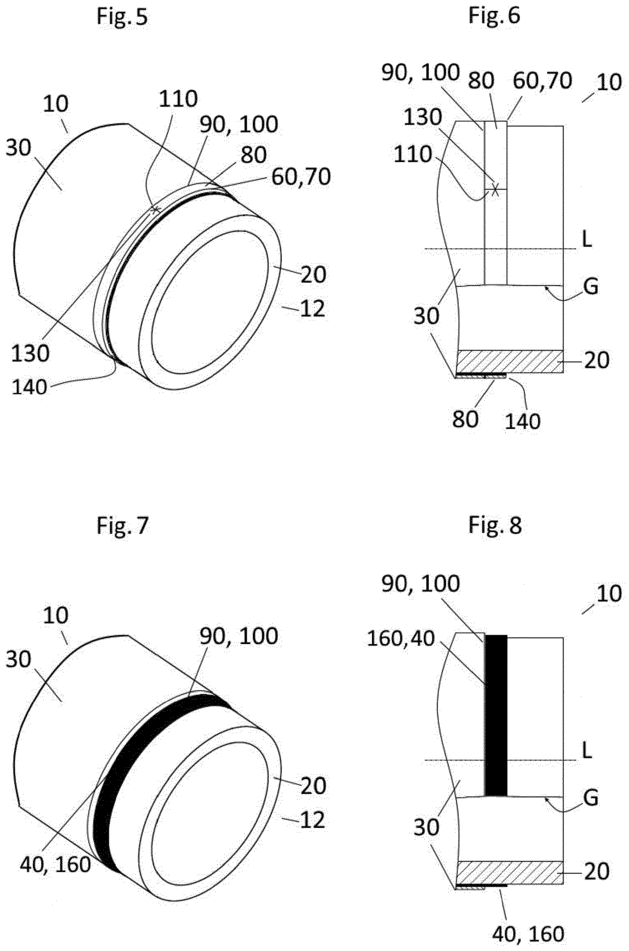

In Fig. 5 und 6 ist das mehrschichtige Rohr 10 nach dem Abschälen des abzutrennenden Abschnitts 132 abgebildet.

In Fig. 7 und 8 ist das mehrschichtige Rohr 10 nach dem Abschälen des zweiten Schutzbereichs 80 abgebildet.

Durch das Abschälen des zweiten Schutzbereichs 80 wurde einen Bereich der Zwischenschicht 40 freigegeben, welcher als verbleibender Abschnitt der Zwischenschicht 160 gekennzeichnet wird, und dessen Form durch die Gestaltung des zweiten Schutzbereichs 80 vorbestimmt ist. Der verbleibende Abschnitt 160 der Zwischenschicht bildet einen in Umfangsrichtung verlaufenden, der Umgebung freigestellten Streifen der Zwischenschicht 40.

Im abgebildeten Rohr ist die Kernschicht dazu bestimmt, mit einer entsprechenden Kernschicht des weiteren Rohrs, bspw. über Schweissen, direkt verbunden zu werden. Hingegen ist die Zwischenschicht dazu bestimmt, über eine Verbindungsschicht mit einer entsprechenden Zwischenschicht des weiteren Rohrs verbunden zu werden. Ferner ist die Deckschicht dazu bestimmt, über eine weitere Verbindungsschicht mit einer entsprechenden Deckschicht des weiteren Rohrs verbunden zu werden.

Die Verbindungsschicht und die weitere Verbindungsschicht stellen sicher, dass die Eigenschaften der Zwischenschicht bzw. der Deckschicht bis zu der zu verbindenden Zwischenschicht bzw. Deckschicht des gleichartigen weiteren Rohrs wenigstens annähernd beibehalten werden.

Das Verfahren zum Abschälen des mehrschichtigen Rohrs 10 zur Herstellung einer Verbindung mit dem nicht dargestellten weiteren Rohr kann anhand der Reihenfolge der Figuren 1, 3, 5 und 7 veranschaulicht werden.

Ausgehend von der Fig. 1 ist das Verfahren durch die folgenden aufeinanderfolgenden Schritte gekennzeichnet:
1) Durchtrennen der Deckschicht 30 im ersten Schutzbereich 50 entlang des ersten Sollbruchsegments 62;
2) Abschälen der Deckschicht 30 im ersten Schutzbereich 50 unter Bildung der Abtrennkante 140 durch den freigegebenen Rand des zweiten Schutzbereichs 80, wie in Fig. 3 dargestellt;
3) Abschälen der durch das Abschälen des ersten Schutzbereichs 50 freigegebenen Zwischenschicht 40, d.h. des abzutrennenden Abschnitts 132 der Zwischenschicht 40, bis zur Abtrennkante 140, wie in Fig. 5 dargestellt;
4) Durchtrennen der Deckschicht 30 im zweiten Schutzbereich 50 entlang des zweiten Sollbruchsegments 110, und
5) Abschälen der Deckschicht 30 im zweiten Schutzbereich 80, wie in Fig. 7 dargestellt. Somit kann der verbleibende Abschnitt 160 der Zwischenschicht 40 freigestellt werden, welcher einen in Umfangsrichtung verlaufenden, der Umgebung freigestellten Streifen der Zwischenschicht 40 bildet.

Bei der Herstellung der Verbindung mit dem weiteren Rohr kann die Kernschicht mit der Kernschicht des weiteren Rohrs bspw. durch Schweissen dichtend verbunden werden. Danach kann der verbleibende Abschnitt 160 der Zwischenschicht 40 über eine den verbleibenden Abschnitt 160 zumindest teilweise in Axialrichtung überlappende, geklebte Verbindungsschicht mit einer entsprechenden Zwischenschicht des weiteren Rohrs durch Kleben verbunden werden.

Anschliessend kann die verbleibende Deckschicht 30 über eine die verbleibende Deckschicht 30 zumindest teilweise in Axialrichtung überlappende, geklebte weitere Verbindungsschicht mit einer entsprechenden verbleibenden Deckschicht des weiteren Rohrs durch Kleben verbunden werden.

### Liste der Bezugszeichen:

| | |
|---|---|
| Axialrichtung des mehrschichtigen Rohrs | L |
| mehrschichtiges Rohr | 10 |
| Rohrende | 12 |
| Kernschicht | 20 |
| Deckschicht | 30 |
| Zwischenschicht | 40 |
| erster Schutzbereich | 50 |
| erstes axiales Ende | 60 |
| erstes Sollbruchsegment | 62 |
| erste Sollbruchstelle | 70 |
| zweiter Schutzbereich | 80 |
| zweites axiale Ende | 90 |
| zweite Sollbruchstelle | 100 |
| zweites Sollbruchsegment | 110 |
| erstes Merkzeichen | 120 |
| zweites Merkzeichen | 130 |
| abzutrennender Abschnitt der Zwischenschicht | 132 |
| Rand des zweiten Schutzbereichs, Reisskante,Abtrennkante | 140 |
| verbleibender Abschnitt der Zwischenschicht | 160 |

## Patentansprüche

1. Mehrschichtiges Rohr (10) umfassend eine Kernschicht (20), eine Deckschicht (30) und eine zwischen der Kernschicht (20) und der Deckschicht (30) angeordneten Zwischenschicht (40), wobei die Deckschicht (30) einen umlaufenden, streifenförmigen ersten Schutzbereich (50) bildet, welcher sich von einem Rohrende (12) bis zu einem vom Rohrende entfernten ersten axialen Ende (60) erstreckt, ein sich vom Rohrende erstreckendes erstes Sollbruchsegment (62) umfasst und dazu bestimmt ist, die Kernschicht (20) und die Zwischenschicht (40) zu schützen und vor einer Verbindung des Rohrs (10) mit einem gleichartigen weiteren Rohr abgeschält zu werden,
**dadurch gekennzeichnet, dass**
der erste Schutzbereich (50) beim ersten axialen Ende (60) durch eine umlaufende erste Sollbruchstelle (70) begrenzt ist, das erste Sollbruchsegment (62) sich vom Rohrende bis wenigstens annähernd zum ersten axialen Ende (60) erstreckt, die Deckschicht (30) einen umlaufenden, streifenförmigen zweiten Schutzbereich (80) bildet, welcher sich vom ersten axialen Ende (60) bis zu einem zweiten axialen Ende (90) erstreckt, beim zweiten axialen Ende (90) durch eine umlaufende zweite Sollbruchstelle (100) begrenzt und dazu bestimmt ist, die Zwischenschicht (40) zu schützen und für eine Verbindung des Rohrs (10) mit dem weiteren Rohr abgeschält zu werden, wobei der durch das Abschälen des ersten Schutzbereichs (50) freigegebene Rand (140) des zweiten Schutzbereichs (80) eine Abtrennkante (140) für das Abschälen der Zwischenschicht (40) bildet.

2. Mehrschichtiges Rohr (10) nach Anspruch 1, **dadurch gekennzeichnet, dass** die Abtrennkante (140) eine Reisskante bildet, welche das Abschälen der Zwischenschicht (40) ohne Werkzeug ermöglicht.

3. Mehrschichtiges Rohr (10) nach Anspruch 1 oder 2, **dadurch gekennzeichnet, dass** die Haftkraft zwischen der Deckschicht (30) und der Zwischenschicht (40) kleiner als die Haftkraft zwischen der Zwischenschicht (40) und der Kernschicht (20) ist.

4. Mehrschichtiges Rohr (10) nach einem der Ansprüche 1 bis 3, **dadurch gekennzeichnet, dass** der zweite Schutzbereich (80) ein sich vom ersten axialen Ende (60) bis zum zweiten axialen Ende (90) erstreckendes, vorzugsweise axial verlaufendes zweites Sollbruchsegment (110) umfasst.

5. Mehrschichtiges Rohr (10) nach Anspruch 4, **dadurch gekennzeichnet, dass** das erste und das zweite Sollbruchsegment (62, 110), in Umfangsrichtung gesehen, um 10 Grad bis 60 Grad, vorzugsweise um 10 Grad bis 30 Grad, besonders bevorzugt um 15 Grad zueinander versetzt ausgebildet sind.

6. Mehrschichtiges Rohr (10) nach einem der Ansprüche 1 bis 5, **dadurch gekennzeichnet, dass** die erste und/oder die zweite Sollbruchstelle (70, 100) und/oder das erste Sollbruchsegment (62), und/oder gegebenenfalls das zweite Sollbruchsegment (110) durch eine ununterbrochene und sich in radialer Richtung nur durch einen Teil der Dicke der Deckschicht (30) erstreckende Vertiefung gebildet ist bzw. sind.

7. Mehrschichtiges Rohr (10) nach Anspruch 6, **dadurch gekennzeichnet, dass** die Vertiefung zwischen 40% bis 95%, bevorzugt zwischen 50% bis 90% der Dicke der Deckschicht (30) beträgt, gemessen von der Oberfläche der Deckschicht (30) bis zum Boden der Sollbruchstelle bzw. des Sollbruchsegments.

8. Mehrschichtiges Rohr (10) nach Anspruch 6 oder 7, **dadurch gekennzeichnet, dass** die Vertiefung einen V-förmigen oder U-förmigen Querschnitt aufweist.

9. Mehrschichtiges Rohr (10) nach einem der Ansprüche 1 bis 8, **dadurch gekennzeichnet, dass** die axiale Länge des ersten Schutzbereichs (50) zwischen 1 cm und 15 cm, vorzugsweise zwischen 2 cm und 10 cm, liegt.

10. Mehrschichtiges Rohr (10) nach einem der Ansprüche 1 bis 9, **dadurch gekennzeichnet, dass** die axiale Länge des zweiten Schutzbereichs (80) zwischen 2 cm und 5 cm, vorzugsweise zwischen 2 cm und 3 cm, liegt.

11. Mehrschichtiges Rohr (10) nach einem der Ansprüche 1 bis 10, **dadurch gekennzeichnet, dass** die Zwischenschicht (40) eine Mehrschichtverbundfolie mit mehreren einzelnen Schichten ist, wobei wenigstens eine Schicht der Mehrschichtverbundfolie eine Sperrschicht ist, welche Sperrschicht als Metallfolienlage und/oder als Kunststoffschicht mit sperrenden Eigenschaften ausgebildet ist, wobei die Zwischenschicht (40) dazu bestimmt ist, mit der Zwischenschicht des weiteren Rohrs wenigstens annähernd dichtend verbunden zu werden.

12. Mehrschichtiges Rohr (10) nach einem der Ansprüche 1 bis 11, **dadurch gekennzeichnet, dass** die Kernschicht (20) aus Kunststoff, insbesondere HDPE, und die Deckschicht aus Kunststoff, insbesondere PP, ausgebildet ist.

13. Verfahren zum Abschälen eines mehrschichtigen Rohrs (10) nach einem der Ansprüche 1 bis 12 zur Verbindung mit einem gleichartigen weiteren Rohr, **gekennzeichnet durch** die aufeinanderfolgenden Schritte:
- Durchtrennen der Deckschicht (30) im ersten Schutzbereich (50) entlang des ersten Sollbruchsegments (62);
- Abschälen der Deckschicht (30) im ersten Schutzbereich (50) unter Bildung der bevorzugt als Reisskante ausgebildete Abtrennkante (140) durch den freigegebenen Rand (140) des zweiten Schutzbereichs (80);
- Abschälen der durch das Abschälen des ersten Schutzbereichs (50) freigegebenen Zwischenschicht (40) bis zur Abtrennkante;
- Durchtrennen der Deckschicht (30) im zweiten Schutzbereich (80) entlang des zweiten Sollbruchsegments (110), und
- Abschälen der Deckschicht (30) im zweiten Schutzbereich (80).

14. Verfahren zur Herstellung eines mehrschichtigen Rohrs (10) nach einem der Ansprüche 1 bis 12, **dadurch gekennzeichnet, dass** die erste und die zweite Sollbruchstelle (70, 100), sowie das erste und das zweite Sollbruchsegment (62, 110) durch Verformung der Deckschicht (30) beim Abkühlen nach deren Extrusion, vorzugsweise bei einer Temperatur zwischen 30°C und 50°C erfolgt.

15. Verfahren zum Verbinden eines mehrschichtigen Rohrs (10) nach einem der Ansprüche 1 bis 12 mit einem gleichartigen weiteren Rohr, **dadurch gekennzeichnet, dass** das mehrschichtige Rohr (10) und das gleichartige weitere Rohr durch das Verfahren nach Anspruch 13 abgeschält werden.

## Claims

1. Multi-layered tube (10) comprising a core layer (20), a covering layer (30) and an intermediate layer (40), which is arranged between the core layer (20) and the covering layer (30), wherein the covering layer (30) forms an encircling, strip-like first protective region (50) which extends from one tube end (12) up to a first axial end (60), the latter being at a distance from the tube end, comprises a first predetermined breaking segment (62) extending from the tube end, and is intended to protect the core layer (20) and the intermediate layer (40) and to be peeled off prior to a connection of the tube (10) to a further tube of a similar type, **characterized in that** the first protective region (50) is delimited at the first axial end (60) by an encircling first predetermined breaking point (70), the first predetermined breaking segment (62) extends from the tube end up to at least almost the first axial end (60), the covering layer (30) forms an encircling, strip-like second protective region (80) which extends from the first axial end (60) up to a second axial end (90), which is delimited at the second axial end (90) by an encircling second predetermined breaking point (100), and which is intended to protect the intermediate layer (40) and to be peeled off for a connection of the tube (10) to the further tube, wherein the rim (140) of the second protective region (80) that is uncovered by way of the peeling of the first protective region (50) forms a detachment edge (140) for the peeling of the intermediate layer (40).

2. Multi-layered tube (10) according to Claim 1, **characterized in that** the detachment edge (140) forms a tear edge, which allows the intermediate layer (40) to be peeled without a tool.

3. Multi-layered tube (10) according to Claim 1 or 2, **characterized in that** the adhesive force between the covering layer (30) and the intermediate layer (40) is smaller than the adhesive force between the intermediate layer (40) and the core layer (20).

4. Multi-layered tube (10) according to one of Claims 1 to 3, **characterized in that** the second protective region (80) comprises a preferably axially extending second predetermined breaking segment (110) which extends from the first axial end (60) up to the second axial end (90) .

5. Multi-layered tube (10) according to Claim 4, **characterized in that**, as seen in the circumferential direction, the first and the second predetermined breaking segment (62, 110) are formed offset from one another by 10 degrees to 60 degrees, preferably by 10 degrees to 30 degrees, particularly preferably by 15 degrees.

6. Multi-layered tube (10) according to one of Claims 1 to 5, **characterized in that** the first and/or the second predetermined breaking point (70, 100) and/or the first predetermined breaking segment (62) and/or possibly the second predetermined breaking segment (110) are/is formed by an uninterrupted depression which, in a radial direction, extends only through a part of the thickness of the covering layer (50).

7. Multi-layered tube (10) according to Claim 6, **characterized in that**, as measured from the surface of the covering layer (30) to the base of the predetermined breaking point or of the predetermined breaking segment, the depression amounts to between 40% and 95%, preferably between 50% and 90%, of the thickness of the covering layer (30).

8. Multi-layered tube (10) according to Claim 6 or 7, **characterized in that** the depression has a V-shaped or U-shaped cross section.

9. Multi-layered tube (10) according to one of Claims 1 to 8, **characterized in that** the axial length of the first protective region (50) lies between 1 cm and 15 cm, preferably between 2 cm and 10 cm.

10. Multi-layered tube (10) according to one of Claims 1 to 9, **characterized in that** the axial length of the second protective region (80) lies between 2 cm and 5 cm, preferably between 2 cm and 3 cm.

11. Multi-layered tube (10) according to one of Claims 1 to 10, **characterized in that** the intermediate layer (40) is a multi-layered composite foil with multiple individual layers, wherein at least one layer of the multi-layered composite foil is a barrier layer, which barrier layer is in the form of a metal foil ply and/or in the form of a plastic layer with blocking properties, wherein the intermediate layer (40) is intended to be connected at least almost sealingly to the intermediate layer of the further tube.

12. Multi-layered tube (10) according to one of Claims 1 to 10, **characterized in that** the core layer (20) is formed from plastic, in particular HDPE, and the covering layer is formed from plastic, in particular PP.

13. Method for peeling a multi-layered tube (10) according to one of Claims 1 to 12 for the purpose of connection to a further tube of a similar type, **characterized by** the successive steps of:
- cutting through the covering layer (30) in the first protective region (50) along the first predetermined breaking segment (62);
- peeling off the covering layer (30) in the first protective region (50) such that the detachment edge (140), preferably in the form of a tear edge, is formed by the uncovered rim (140) of the second protective region (80);
- peeling off the intermediate layer (40), which has been uncovered by way of the peeling of the first protective region (50), up to the detachment edge;
- cutting through the covering layer (30) in the second protective region (80) along the second predetermined breaking segment (110), and
- peeling off the covering layer (30) in the second protective region (80).

14. Method for producing a multi-layered tube (10) according to one of Claims 1 to 12, **characterized in that** the first and the second predetermined breaking point (70, 100) and also the first and the second predetermined breaking segment (62, 110) are realized by deformation of the covering layer (30) during cooling following extrusion thereof, preferably at a temperature of between 30°C and 50°C.

15. Method for connecting a multi-layered tube (10) according to one of Claims 1 to 12 to a further tube of a similar type, **characterized in that** the multi-layered tube (10) and the further tube of a similar type are peeled by way of the method according to Claim 13.

## Revendications

1. Tube multicouche (10) comprenant une couche centrale (20), une couche de recouvrement (30) et une couche intermédiaire (40) agencée entre la couche centrale (20) et la couche de recouvrement (30), la couche de recouvrement (30) formant une première zone de protection périphérique en forme de bande (50), qui s'étend depuis une extrémité de tube (12) jusqu'à une première extrémité axiale (60) éloignée de l'extrémité de tube, comprenant un premier segment destiné à la rupture (62) s'étendant depuis l'extrémité de tube et étant destinée à protéger la couche centrale (20) et la couche intermédiaire (40) et à être pelée avant une liaison du tube (10) à un autre tube de même type, **caractérisé en ce que** la première zone de protection (50) est délimitée à la première extrémité axiale (60) par une première zone périphérique destinée à la rupture (70), le premier segment destiné à la rupture (62) s'étend depuis l'extrémité de tube jusqu'à au moins approximativement la première extrémité axiale (60), la couche de recouvrement (30) forme une deuxième zone de protection périphérique en forme de bande (80), qui s'étend depuis la première extrémité axiale (60) jusqu'à une deuxième extrémité axiale (90), qui est délimitée au niveau de la deuxième extrémité axiale (90) par une deuxième zone périphérique destinée à la rupture (100) et qui est destinée à protéger la couche intermédiaire (40) et à être pelée pour une liaison du tube (10) à l'autre tube, le bord (140) de la deuxième zone de protection (80), exposé par le pelage de la première zone de protection (50), formant une arête de séparation (140) pour le pelage de la couche intermédiaire (40).

2. Tube multicouche (10) selon la revendication 1, **caractérisé en ce que** l'arête de séparation (140) forme une arête de déchirure, qui permet de peler la couche intermédiaire (40) sans outil.

3. Tube multicouche (10) selon la revendication 1 ou 2, **caractérisé en ce que** la force d'adhérence entre la couche de recouvrement (30) et la couche intermédiaire (40) est inférieure à la force d'adhérence entre la couche intermédiaire (40) et la couche centrale (20).

4. Tube multicouche (10) selon l'une quelconque des revendications 1 à 3, **caractérisé en ce que** la deuxième zone de protection (80) comprend un deuxième segment destiné à la rupture (110) s'étendant depuis la première extrémité axiale (60) jusqu'à la deuxième extrémité axiale (90), de préférence axialement.

5. Tube multicouche (10) selon la revendication 4, **caractérisé en ce que** le premier et le deuxième segment destiné à la rupture (62, 110), tels que vus dans la direction circonférentielle, sont configurés sous forme décalée l'un par rapport à l'autre de 10 degrés à 60 degrés, de préférence de 10 degrés à 30 degrés, de manière particulièrement préférée de 15 degrés.

6. Tube multicouche (10) selon l'une quelconque des revendications 1 à 5, **caractérisé en ce que** la première et/ou la deuxième zone destinée à la rupture (70, 100) et/ou le premier segment destiné à la rupture (62), et/ou le cas échéant le deuxième segment destiné à la rupture (110) est ou sont formé(s) par un creux ininterrompu et ne s'étendant dans la direction radiale que sur une partie de l'épaisseur de la couche de recouvrement (30).

7. Tube multicouche (10) selon la revendication 6, **caractérisé en ce que** le creux représente entre 40 % et 95 %, de préférence entre 50 % et 90 % de l'épaisseur de la couche de revêtement (30), mesurée depuis la surface de la couche de revêtement (30) jusqu'au fond de la zone destinée à la rupture ou du segment destiné à la rupture.

8. Tube multicouche (10) selon la revendication 6 ou 7, **caractérisé en ce que** le creux présente une section transversale en forme de V ou en forme de U.

9. Tube multicouche (10) selon l'une quelconque des revendications 1 à 8, **caractérisé en ce que** la longueur axiale de la première zone de protection (50) est comprise entre 1 cm et 15 cm, de préférence entre 2 cm et 10 cm.

10. Tube multicouche (10) selon l'une quelconque des revendications 1 à 9, **caractérisé en ce que** la longueur axiale de la deuxième zone de protection (80) est comprise entre 2 cm et 5 cm, de préférence entre 2 cm et 3 cm.

11. Tube multicouche (10) selon l'une quelconque des revendications 1 à 10, **caractérisé en ce que** la couche intermédiaire (40) est une feuille composite multicouche ayant plusieurs couches individuelles, au moins une couche de la feuille composite multicouche étant une couche de barrage, laquelle couche de barrage étant conçue en tant que strate de feuille métallique et/ou en tant que couche de matière plastique ayant des propriétés de barrage, la couche intermédiaire (40) étant destinée à être reliée de manière au moins approximativement étanche à la couche intermédiaire de l'autre tube.

12. Tube multicouche (10) selon l'une quelconque des revendications 1 à 11, **caractérisé en ce que** la couche centrale (20) est configurée en matière plastique, en particulier en HDPE, et la couche de recouvrement en matière plastique, en particulier en PP.

13. Procédé de pelage d'un tube multicouche (10) selon l'une quelconque des revendications 1 à 12 pour la liaison à un autre tube de même type, **caractérisé par** les étapes successives suivantes :
- le sectionnement de la couche de recouvrement (30) dans la première zone de protection (50) le long du premier segment destiné à la rupture (62) ;
- le pelage de la couche de recouvrement (30) dans la première zone de protection (50) en formant l'arête de séparation (140), de préférence configurée en tant qu'arête de déchirure, par le bord exposé (140) de la deuxième zone de protection (80) ;
- le pelage de la couche intermédiaire (40) exposée par le pelage de la première zone de protection (50) jusqu'à l'arête de séparation ;
- le sectionnement de la couche de recouvrement (30) dans la deuxième zone de protection (80) le long du deuxième segment destiné à la rupture (110), et
- le pelage de la couche de recouvrement (30) dans la deuxième zone de protection (80).

14. Procédé de fabrication d'un tube multicouche (10) selon l'une quelconque des revendications 1 à 12, **caractérisé en ce que** la première et la deuxième zone destinée à la rupture (70, 100), ainsi que le premier et le deuxième segment destiné à la rupture (62, 110) sont réalisés par déformation de la couche de recouvrement (30) lors du refroidissement après son extrusion, de préférence à une température comprise entre 30 °C et 50 °C.

15. Procédé de liaison d'un tube multicouche (10) selon l'une quelconque des revendications 1 à 12 à un autre tube de même type, **caractérisé en ce que** le tube multicouche (10) et l'autre tube de même type sont pelés par le procédé selon la revendication 13.
